# EUROPEAN PATENT APPLICATION

(11) **EP 4 672 141 A1**
(43) Date of publication of application: **31.12.2025**
(21) Application number: 25184320.7
(22) Date of filing: 20.06.2025
(51) Int. Cl.: G06T 7/00

(54) **METHOD FOR AUTOMATED GRAIN MAPPING**

(30) Priority: 26.06.2024 US 202418755043
(71) Applicant: RTX Corporation, Farmington, CT 06032 (US)
(72) Inventor: BRENEMAN, Ryan C., Newington, 06111 (US); INGRAM, Kyle, South Windsor, 06074 (US)
(74) Representative: Dehns

(57) **Abstract**

A method for grain mapping of a surface of a component includes the steps of constructing a model comprising a three-dimensional scanned model of the component; scanning the component with RGB light to obtain an RGB light scan; applying the RGB light scan to the three-dimensional scanned model of the component to produce a combined three-dimensional model of the component with an RGB light scan overlay on the three-dimensional model; and analyzing the combined three-dimensional model of the component with the RGB light scan overlay on the three-dimensional model to identify grain boundaries in the component.

## Description

### FIELD

The present disclosure relates to inspection of single crystal components such as turbine components, and further to identification of grain boundaries in such components.

### BACKGROUND

Single crystal turbine components must be inspected for secondary grains as boundaries are a point of failure during operation. This can be accomplished by etching components in an appropriate etchant to reveal grain structure, such as Kallings etchant, AG-21 etchant containing nitric and hydrofluoric acid, or a ferric acid etchant followed by an anodic etch in phosphoric acid based etchant. The components can then be visually checked by a human inspector for any boundaries. The etchant generates a color and/or contrast based on orientation of the crystal structure and incoming light source. The inspector can move the component under lighting and look for contrast between regions to identify a boundary indicating a secondary grain. This is a labor-intensive inspection requiring highly trained inspectors. Error must be accounted for per standard quality expectations for human visual assessment impacting performance standards.

### SUMMARY OF THE DISCLOSURE

In one aspect, there is provided a method for grain mapping of a surface of a component that comprises the steps of constructing a model comprising a three-dimensional scanned model of the component; scanning the component with full spectrum light (RGB light) to obtain an RGB light scan; applying the RGB light scan to the three-dimensional scanned model of the component to produce a combined three-dimensional model of the component with an RGB light scan overlay on the three-dimensional model; and analyzing the combined three-dimensional model of the component with the RGB light scan overlay on the three-dimensional model to identify grain boundaries in the component.

In a non-limiting configuration, the constructing step comprises scanning the component with structured light to produce the three-dimensional scanned model.

In another non-limiting configuration, the constructing step and the scanning step are conducted simultaneously.

In still another non-limiting configuration, the scanning step comprises scanning the component with RGB light from an RGB light source and capturing RGB light reflected from the component with a camera.

In a further non-limiting configuration, the method further comprises moving at least one of the component, the RGB source and the camera during the scanning.

In a still further non-limiting configuration, the analyzing step comprises comparing different views of the combined three-dimensional model of the component with the RGB light scan overlay on the three-dimensional model, wherein a change in color and/or contrast in the different views indicates a grain boundary.

In another non-limiting configuration, the change in color and/or contrast represents a first region that is darker than a second region in a first view and the second region is darker than the first region in a second view, the method further comprising identifying a contrast boundary between the first region and the second region.

In still another non-limiting configuration, the method further comprises mapping region boundaries on the three-dimensional model and outputting an image, a report or combinations thereof.

In a further non-limiting configuration, the method further comprises, before the constructing step, etching a surface of the component with an etchant containing acid.

In a still further non-limiting configuration, the etching step comprises etching with an etchant containing ferric acid, and then anodic etching in an etchant containing phosphoric acid.

In another aspect, there is provided a system for grain mapping of a surface of a component that comprises: a support for holding the component; a source for directing structured light at the component on the support; an RGB source for directing RGB light at the component on the support; a camera for capturing images reflected from the component on the support; and a control operatively associated with the support, the source, the RGB source and the camera, and configured to: construct a model comprising a three-dimensional scanned model of the component; scan the component with RGB light to obtain an RGB light scan; apply the RGB light scan to the three-dimensional model of the component to produce a combined three-dimensional model of the component with an RGB light scan overlay on the three-dimensional model; and analyze the RGB light scan overlay on the three-dimensional model of the component to identify grain boundaries in the component.

In a non-limiting configuration, the system further comprises a conveyance connected with at least one of the support, the source, the RGB source and the camera, and wherein the control is operatively associated with the conveyance and configured to control the conveyance to move at least one of the component, the source, the RGB source and the camera during the scanning.

In another non-limiting configuration, the source and the RGB source are a single light source.

In still another non-limiting configuration, the control is configured such that the constructing comprises scanning the component with structured light from the source of structured light, receiving reflected images of structured light at the camera, and producing the three-dimensional model from the reflected images.

In a further non-limiting configuration, the control is configured to conduct the constructing step and the scanning step simultaneously.

In a still further non-limiting configuration, the control is configured to carry out the analyzing step by comparing different views of the three-dimensional model with RGB light overlay to identify contrast boundaries on the component.

In another non-limiting configuration, the control is configured to carry out the comparing step by scanning for a first region that is darker than a second region in a first view of the model and wherein the second region is darker than the first region in a second view of the model, and identifying a contrast boundary between the first region and the second region.

In still another non-limiting configuration, the control is configured to carry out the comparing by identifying color and/or contrast change in different views of the model and mapping the color and/or contrast change to location of boundaries in the model.

In a further non-limiting configuration, the control is further configured to map contrast boundaries on the three-dimensional model and output an image, a report or combinations thereof.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 schematically illustrates a manual process for inspecting parts or components for grain boundaries;
FIG. 2 illustrates one non-limiting configuration of an automated system wherein a part or component is mounted on a rotating support for scanning;
FIG. 3 illustrates another non-limiting configuration wherein a light source is moveable relative to the support;
FIG. 4 illustrates another non-limiting configuration wherein a camera for capturing scans of the part or component is moveable relative to the support;
FIG. 5 illustrates a non-limiting embodiment of a system for carrying out a method as disclosed herein; and
FIG. 6 is a flow chart illustrating steps of a method as disclosed herein.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

This disclosure relates to a system and method for mapping grains in the surface of components such as, but not limited to, single crystal turbine components and the like. Such components must be inspected for secondary grains as boundaries can be a point of possible failure during operation.

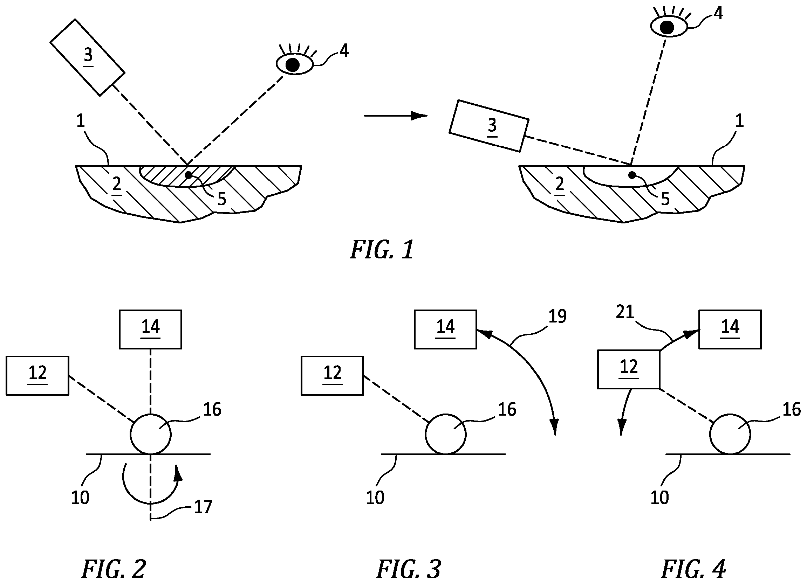

FIG. 1 illustrates a manual method for carrying out such inspection, and shows a surface 1 of a part or component 2, a light source 3 directing light at the surface, and the position of a viewer 4 which is changed from a first position in the left-side view of FIG. 1 to a second position in the right-side view of FIG. 1. This results in viewing of the part from a different orientation in the second position. This change in position can cause a region 5 which may contain a boundary to appear dark in one orientation, and then appear light in a different orientation. This change in light and dark is illustrated in FIG. 1 by cross hatching of region 5 in one view and no cross hatching in the other view. As set forth above, this manual process is time consuming, requires a highly trained inspector, and is prone to errors.

FIGS. 2-4 illustrate aspects of an automated method wherein different scans of a component are obtained while moving one of the elements (component, camera, light source) to obtain scans at different orientations of these elements. Thus, FIG. 2 illustrates a configuration having a support 10 for supporting a component or part 16 to be inspected for grains, a camera 12 for capturing reflected images from the component, and a light source 14 which can be a source of structured light which, when reflected to camera 12, can be used to create a 3-dimensional model of the component being inspected. Light source 14 can also be a source of full spectrum or RGB light which is used as will be discussed further below to identify grains in the component. Component 16 is shown schematically as a simple circular object, but could be any article wherein it is useful to identify and map secondary grains. In FIG. 2, the different orientations as desired are obtained by moving, in this case rotating around an axis 17, support 10 with component 16 positioned thereon.

FIG. 3 shows another non-limiting configuration wherein the same support 10, camera 12, light source 14 and component 16 may be present, and in this configuration light source 14 can be moved or "scanned" relative to component 16 as shown by arrow 19.

FIG. 4 illustrates another non-limiting configuration wherein camera 12 can be moved or "scanned" relative to component 16 to obtain the different orientations as desired, in this case as shown by arrow 21. The focus of these different movements is to obtain different views of component 16 under RGB light, as viewing a grain boundary under RGB light from different views can cause different color and/or contrast to be reflected back to a camera for capturing the RGB scan results. This change in color and/or contrast can therefore be used to identify grain boundaries as desired.

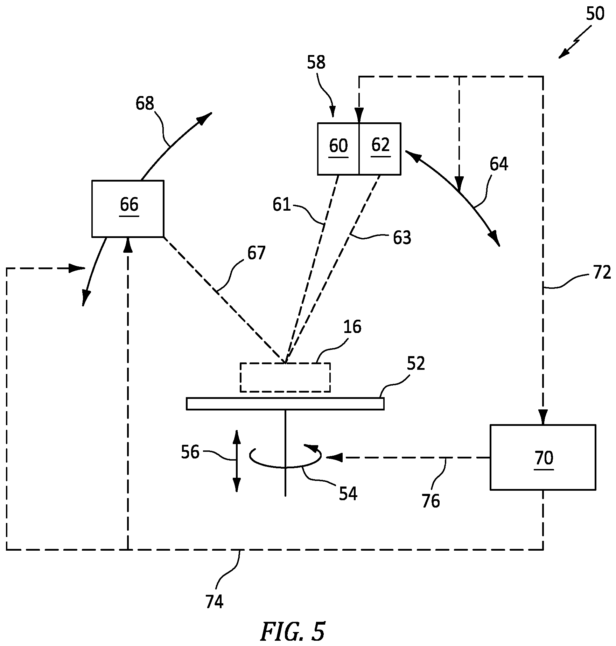

FIGS. 5 illustrates a non-limiting embodiment wherein a system 50 for carrying out an automated grain mapping technique is illustrated. In system 50, a support 52 for the component or part to be inspected can be fixed in place, or can be mounted for rotation and optionally changes in elevation as illustrated schematically at 54, 56. Light source 58 is schematically illustrated, and can include a source 60 of structured light 61 as well as a source 62 of RGB light 63. Sources 60, 62 are illustrated as a single element, but they could also be separate components, moveable together or separately, all within the scope of the present disclosure. As shown, light source 58 can be moveable, in this case along an arc 64 relative to a component 16 on support 52, to direct light onto component 16 from different orientations or positions.

Still referring to FIG. 5, a camera 66 can be positioned to capture images 67 of component 16 in the form of reflected structured light and also reflected RGB light from component 16. Camera 66 can also be mounted for movement relative to component 16, in this case along an arc 68 as shown in FIG. 5.

A control 70 can be operatively associated with the various components of the system, in this case with any one or all of drives for moving support 52, light source 58 and camera 66. In addition, control 70 also receives signals from camera 66 which can be analyzed or otherwise processed to create the 3-dimensional scanned image of the component and also to receive the reflected RGB light and create an RGB light overlay, and then to superimpose or otherwise apply the overlay to the 3-dimensional scanned model of the component. Thus, a full digital facsimile of the physical object is created incorporating the dimensional data obtained by the structured light scan and the surface appearance from the RGB scan.

Control 70 can be a combination of microprocessor(s) and storage for storing programming to control the various components of system 50, and also for analyzing the data 67 received from camera 66. In this regard, the data 67 can first be used to create the 3-dimensional model of the component as desired. Then, reflected RGB images that are received by camera 66 can be applied as an overlay to produce a combined 3-dimensional model of the component with the overlay, and this combined model and overlay can be analyzed for views where the same portion of the component exhibit a change in color and/or contrast, for example going from light to dark or vice versa, and this change in color and/or contrast indicates a likely grain boundary. Further, by mapping the RGB overlay to the 3-dimenionsal model, it is possible to also determine size and other information of interest regarding the grain and grain boundaries, and all of this information can be included in a report which can then be used to determine whether the component passes or fails inspection. Precise size and location of grain features are critical in determining if the feature is a rejectable defect or allowable condition. Grain features below a certain size or within certain regions of the component may not be a rejectable defect. Thus, the combined 3-dimensional model with RGB overlay enables full inspection including decision to accept or reject component.

The movement of components during scanning generates a collection of views in the 3-dimensional model as well as in the RGB scan data, and the RGB scan data can be applied as an overlay to the 30dimensional model to make a combined model that can then be analyzed from the different views, in effect analyzed while in motion, to look for changes in color and/or contrast that indicate grain boundaries. These grain boundaries can then be mapped to the 3-dimeionsal model which allows for determining the location and size of the grain, and also creates a report which can then be reviewed, stored and the like to not only provide detailed information of the grain analysis, but to create a record for analysis of that component for future reference if necessary.

The operative association referred to above with respect to control 70 refers to various electronic or wireless communications between control 70 and light source 58, for example to send control signals to the movement mechanisms of one or more of support 52, light source 58 and camera 66. These connections are illustrated as broken line arrows. Further, this operative association also includes communication back to control 70, for example from camera 66, to provide RGB scan data to control 70 for analysis and identification of grain boundaries and automated grain mapping. The configuration of control 70 can also include commands to determine what light is directed on component 16 and for how long. Operative association of control 70 is shown at 72 with respect to control of light source 58 and movement thereof. Operative association of control 70 with camera 66 and the movement mechanism for camera 66 is shown at 74. Further, operative association of control 70 with the movement mechanism of support 52 is shown at 76. This can all be accomplished with wired or wireless connection between the control 70 and each element of the system whereby information can be conveyed between the control and the system element. The hardware and programming for establishing this operative association is well known to persons skilled in the art.

The mechanisms for bringing about the movement of the components of system 50 as schematically illustrated in FIG. 5 can be any well-known motor and conveyance mechanisms, such as servo motors, as one non-limiting example.

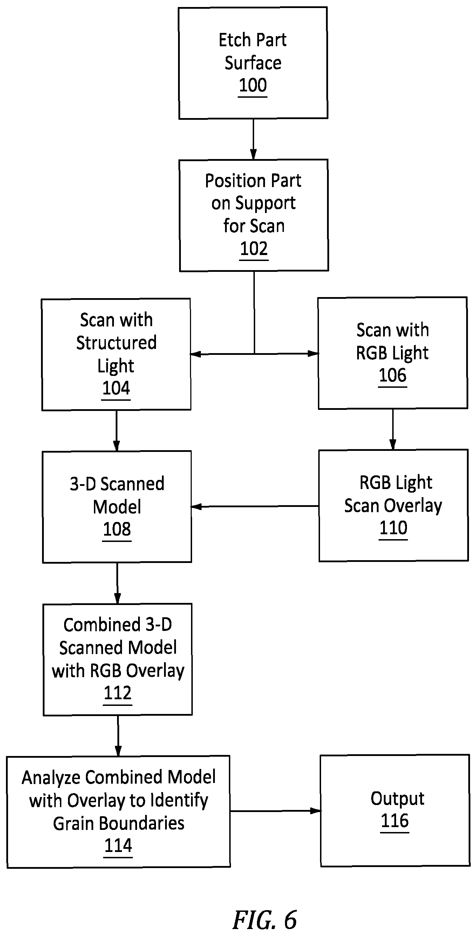

Turning to FIG. 6, a flow chart illustrates a non-limiting embodiment of a method for automated grain mapping.

In order to detect grain boundaries in the surface of a single crystal component, a preliminary step 100 is to etch the surface of the part. This etching can be carried out with suitable etchants containing one or more suitable acid(s), and in one non-limiting configuration, a first etching can be conducted with an etchant containing ferric acid, followed by an anodic etching with an etchant containing phosphoric acid, that is, a phosphoric acid-based etchant. In the first etching, the acid, be it ferric acid or some other acid, can be a recipe or formula of a number of different types of acid. This can, for example, be tailored to the material of the component being etched and the goal of the etching, among other factors. For the anodic etching, again any type of phosphoric acid or other acid that is/are functional for anodic etching can be used. Of course, etchants containing other acids can be used as desired, and the examples given are non-limiting in nature. Next, in step 102, the part or component can be positioned for scanning, for example in a system such as is illustrated in FIG. 5. This can involve simply placing the component on a support, or securing the component in place in a particular orientation as needed.

The next steps are scanning steps 104, 106, and these steps can be carried out simultaneously or sequentially. In scanning step 104, the component is scanned with a structured light that is reflected from the component and captured by a camera. The captured images can be analyzed and compared to the known patterns in the structured light such that a 3-D scanned model can be constructed (step 108). This 3-dimensional scanned model is a collection of views of the component from different positions such that the model can be moved during analysis or inspection.

In the meantime, in step 106, RGB light is also directed at the component and reflected to be captured for example by a camera. This RGB light can reflect light or dark at a grain boundary. Further, the light or dark reflection tends to "flip" when viewed from different angles with respect to the boundary. Thus, by capturing an RGB scan having its own collection of views of the surface of the component from different orientations, the resulting data can be applied as an overlay to the 3-dimensional model of the component, and the combined model and overlay can be analyzed to identify grain boundaries, specifically by looking for changes in color and/or contrast of a region in different views. Thus, the RGB captured data obtained in step 106 can be configured into an RGB light overlay (step 110) that can then be superimposed over the 3-D scanned model of step 108, to generate a combined 3-dimensional scanned model with RGB overlay as shown in step 112. This combined model can then be analyzed (step 114), comparing different views of the collection of views making up the RGB overlay, and identifying regions where there is a change in color and/or contrast as a boundary change. These boundary changes indicate a grain boundary, and the identified grain boundaries can be mapped to the 3-dimensional model of the component and used to determine accurate information regarding size and location of the identified grain boundaries and secondary grains. This information can then be used to determine whether the component in question passes or fails, and also can be saved in a report generated in an output step.

Specifically, data from different orientations or views can then be analyzed as set forth above to confirm regions where the light or dark image "flips" as confirmed grain boundaries. These grain boundaries can then be mapped, for example to the 3-D scanned image of the component, and output can be provided in step 116 which includes mapping of region boundaries based upon the contrast boundaries and output an image, a report or combinations thereof. The image can be an image of the component showing areas of identified grain boundaries or mapped grains.

It should be appreciated that the method and system as disclosed herein can be used to greatly improve speed and accuracy of grain mapping. Further, as indicated above, this disclosure is made in terms of single crystal turbine components, but components of other machinery, turbomachinery or other industrial machinery can also be analyzed with the disclosed automated grain mapping technique with similar benefits.

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the disclosure may be practiced other than as specifically described. Thus, the scope of the present claims is not specifically limited by the details of specific embodiment disclosed herein, but rather the claims define the full and reasonable scope of the disclosure.

## Claims

1. A method for grain mapping of a surface of a component (16), comprising the steps of:
constructing a model comprising a three-dimensional scanned model of the component (16);
scanning the component (16) with RGB light (63) to obtain an RGB light scan;
applying the RGB light scan to the three-dimensional scanned model of the component (16) to produce a combined three-dimensional model of the component (16) with an RGB light scan overlay on the three-dimensional model; and
analyzing the combined three-dimensional model of the component (16) with the RGB light scan overlay on the three-dimensional model to identify grain boundaries in the component (16).

2. The method of claim 1, wherein the constructing step comprises scanning the component (16) with structured light (61) to produce the three-dimensional scanned model.

3. The method of claim 1 or 2, wherein the constructing step and the scanning step are conducted simultaneously.

4. The method of any preceding claim, wherein the scanning step comprises scanning the component (16) with RGB light (63) from an RGB light source (14; 58, 62) and capturing RGB light (63) reflected from the component (16) with a camera (12; 66).

5. The method of claim 4, further comprising moving at least one of the component (16), the RGB light source (14; 58, 62) and the camera (12; 66) during the scanning.

6. The method of claim 5, wherein the analyzing step comprises comparing different views of the combined three-dimensional model of the component (16) with the RGB light scan overlay on the three-dimensional model, wherein a change in color and/or contrast in the different views indicates a grain boundary.

7. The method of claim 6, wherein the change in color and/or contrast represents a first region that is darker than a second region in a first view and wherein the second region is darker than the first region in a second view, and identifying a contrast boundary between the first region and the second region.

8. The method of claim 6 or 7, further comprising mapping region boundaries on the three-dimensional model and outputting an image, a report or combinations thereof.

9. The method of any preceding claim, further comprising, before the constructing step, etching a surface of the component (16) with an acid, optionally wherein the etching step comprises etching with an etchant containing ferric acid, and then anodic etching in an etchant containing phosphoric acid.

10. A system (50) for grain mapping of a surface of a component (16), comprising:
a support (10; 52) for holding the component (16);
a source (14; 58, 60) for directing structured light (61) at the component (16) on the support (10; 52);
an RGB source (14; 58, 62) for directing RGB light (63) at the component (16) on the support (10; 52);
a camera (12; 66) for capturing images (67) reflected from the component (16) on the support (10; 52); and
a control (70) operatively associated with the support (10; 52), the source (14; 58; 60), the RGB source (14; 58; 62) and the camera (12; 66), and configured to:
construct a model comprising a three-dimensional scanned model of the component (16);
scan the component (16) with RGB light (63) to obtain an RGB light scan;
apply the RGB light scan to the three-dimensional model of the component (16) to produce a combined three-dimensional model of the component (16) with an RGB light scan overlay on the three-dimensional model; and
analyze the RGB light scan overlay on the three-dimensional model of the component (16) to identify grain boundaries in the component (16).

11. The system of claim 10, further comprising a conveyance connected with at least one of the support (10; 52), the source (14; 58, 60), the RGB source (14; 58, 62) and the camera (12; 66), and wherein the control (70) is operatively associated with the conveyance and configured to control the conveyance to move at least one of the component (16), the source (14; 58, 60), the RGB source (14; 54, 62) and the camera (12; 66) during the scanning, optionally wherein the source (14; 58, 62) and the RGB source (14; 58, 60) are a single light source (14; 58, 60, 62).

12. The system of claim 11, wherein the control (70) is configured such that the constructing comprises scanning the component (16) with structured light (61) from the source (14; 58, 60) of structured light (61), receiving reflected images of structured light (61) at the camera (12; 66), and producing the three-dimensional model from the reflected images.

13. The system of claim 11 or 12, wherein the control (70) is configured to conduct the constructing step and the scanning step simultaneously.

14. The system of any of claims 11 to 13, wherein the control (70) is configured to carry out the analyzing step by comparing different views of the three-dimensional model with RGB light overlay to identify contrast boundaries on the component (16).

15. The system of claim 14, wherein the control (70) is configured to carry out the comparing step by scanning for a first region that is darker than a second region in a first view of the model and wherein the second region is darker than the first region in a second view of the model, and identifying a contrast boundary between the first region and the second region, optionally, wherein:
the control (70) is configured to carry out the comparing by identifying color and/or contrast change in different views of the model and mapping the color and/or contrast change to location of boundaries in the model; and/or
the control (70) is further configured to map contrast boundaries on the three-dimensional model and output an image, a report or combinations thereof.
